# EUROPÄISCHE PATENTANMELDUNG

(11) **EP 4 811 572 A1**
(43) Veröffentlichungstag der Anmeldung: **23.09.2026**
(21) Anmeldenummer: 26165954.4
(22) Anmeldetag: 19.03.2026
(51) Int. Cl.: H02G 1/02

(54) **LEITUNGSFAHRWAGEN**

(30) Priorität: 19.03.2025 DE 102025110577
(71) Anmelder: Pagliazzo, Francesco, 78234 Engen (DE)
(72) Erfinder: Pagliazzo, Francesco, 78234 Engen (DE)
(74) Vertreter: Patentanwälte und Rechtsanwalt Weiß, Arat & Partner mbB

(57) **Zusammenfassung**

Die Erfindung betrifft einen Leitungsfahrwagen (L) für Überlandstromleitungen mit einem Gerüstkorb (1), wobei der Gerüstkorb (1) aus einem Boden (2), einer Frontseite (3), einer Rückseite (4) und zwei Seitenflächen (5, 6) besteht, wobei die Frontseite (3) einen ersten Überfahr-Ausleger (7) aufweist und die Rückseite (4) einen zweiten Überfahr-Ausleger (8) aufweist, wobei die Frontseite (3) eine Antriebswelle (9) aufweist, wobei die Antriebswelle (9) eine erste Gummi-Leitungsrolle (10) aufweist, wobei die Rückseite (4) eine Nachlaufwelle (11) mit einer weiteren Gummi-Leitungsrolle (12) aufweist, wobei ein Schaltschrank (13) vorhanden ist, wobei
- die Antriebswelle (9) einen ersten Elektroantrieb (14) aufweist, wobei zwischen der Antriebswelle (9) und dem ersten Elektroantrieb (14) ein erstes Übersetzungsgetriebe (15) angeordnet ist und
- die Nachlaufwelle (11) einen zweiten Elektroantrieb (16) aufweist, wobei zwischen der Nachlaufwelle (11) und dem zweiten Elektroantrieb (16) ein zweites Übersetzungsgetriebe (17) angeordnet ist,
- wobei der erste Überfahr-Ausleger (7) und der zweite Überfahr-Ausleger (8) mittels einer Hydraulikpumpe (18) aktivierbar sind,
- wobei die Hydraulikpumpe (18) elektrisch betrieben ist.

## Beschreibung

### Technisches Gebiet

Die Erfindung betrifft einen Leitungsfahrwagen nach dem Oberbegriff des Anspruchs 1.

### Stand der Technik

Derartige Leitungsfahrwagen sind bereits in vielfältiger Form und Ausgestaltung bekannt und gebräuchlich.

So wird beispielsweise in der DE 10 2016 221 701 A1 ein Leitungsfahrwagen offenbart, wobei ein Verbrennungsmotor beschrieben ist, welcher auch zur Stromerzeugung genutzt wird.

In diesem Zusammenhang wird außerdem auf die DE 10 2021 129 038 A1 verwiesen. Dort ist ein Leitungsfahrwagen für Überlandstromleitungen mit einem Gerüstkorb und einer Antriebswelle ausgestattet, wobei die Antriebswelle wieder eine erste Gummi-Leitungsrolle aufweist, wobei der Gerüstkorb ausserdem eine Nachlaufwelle mit einer weiteren Gummi-Leitungsrolle aufweist, wobei die Antriebswelle mit einem Antrieb rotierbar ist, und der Antrieb elektrisch ist und sich aus einer Batterie speist, wobei der Antrieb eine Hydraulikpumpe antreibt und die Hydraulikpumpe über Hydraulikleitungen die Antriebswelle antreibt.

### Aufgabe der Erfindung

Die Aufgabe der vorliegenden Erfindung ist es, die Nachteile aus dem Stand der Technik zu überwinden. Insbesondere soll ein Leitungsfahrwagen bereitgestellt werden, der ein dynamisches Anfahren ermöglicht, also ein gleichmäßiges und kontrolliertes Erhöhen der Antriebskraft, um eine harmonische Beschleunigung ohne plötzliche Bewegungen zu gewährleisten. Ebenso soll er beim Verzögern die Geschwindigkeit durch eine stetige, kontrollierte Reduktion der Antriebskraft verringern, um ungleichmäßige Verzögerungen und ein Stottern des Leitungsfahrwagens zu vermeiden. Daneben soll der Leitungsfahrwagen eine längere Zeit und über eine längere Strecke betrieben werden können.

### Lösung der Aufgabe

Zur Lösung der Aufgabe führen die Merkmale nach dem Anspruch 1.

Vorteilhafte Ausgestaltungen sind in den Unteransprüchen beschrieben.

Der erfindungsgemäße Leitungsfahrwagen dient der Wartung und Kontrolle von Überlandstromleitungen und bewegt sich entlang dieser Leitungen. Er besteht in erster Linie aus einem Gerüstkorb, der einen Boden, eine Frontseite, eine Rückseite und zwei Seitenflächen aufweist. Der Gerüstkorb gewährleistet eine sichere Aufnahme der arbeitenden Personen während der Kontroll- und Wartungsfahrten.

Der Boden bildet eine Technikaufnahme, die sich außerhalb des Gerüstkorbs befindet, um eine bessere Zugänglichkeit zu ermöglichen. In dieser Technikaufnahme sind verschiedene technische Komponenten untergebracht, die für den Betrieb des Leitungsfahrwagens essenziell sind.

Der Stromspeicher ist eine zentrale Komponente, die die Energieversorgung der verschiedenen elektrischen Systeme sicherstellt. Er dient der Versorgung der Hydraulikpumpe sowie der beiden Elektroantriebe und gewährleistet damit eine kontinuierliche und zuverlässige Funktion des Fahrzeugs. Der Stromspeicher ist so konzipiert, dass er problemlos ausgetauscht werden kann, falls er seine Kapazität erreicht oder eine Wartung erforderlich ist. Die Möglichkeit eines einfachen Wechselsystems, ähnlich wie bei Fahrrad-Akkus, erleichtert den Austausch und minimiert Ausfallzeiten. Dies trägt erheblich zur Betriebseffizienz des Leitungsfahrwagens bei, da durch einen schnellen Austausch des Stromspeichers längere Unterbrechungen vermieden werden können.

Der Schaltschrank ist ein weiterer wesentlicher Bestandteil des Systems. Er enthält die Steuersoftware sowie sämtliche elektronischen Bauteile, die für die Nutzung des Leitungsfahrwagens notwendig sind. Durch eine intelligente Steuerung können die verschiedenen Antriebs- und Hydrauliksysteme optimal koordiniert werden, was eine effiziente und präzise Fortbewegung ermöglicht. Der Schaltschrank ist auswechselbar konstruiert, indem er über eine Schraubverbindung an einer Halteplatte befestigt ist, die fest mit dem Gerüstkorb verbunden ist. Diese Bauweise erlaubt eine einfache und schnelle Demontage, falls der Schaltschrank gewartet oder ersetzt werden muss.

Zusätzlich ist der Schaltschrank mit einer Verteilereinrichtung lösbar gekoppelt. Diese Verteilereinrichtung ermöglicht eine effiziente Verbindungsherstellung zwischen der im Schaltschrank integrierten Software sowie den elektronischen Bauteilen und den übrigen Systemen des Leitungsfahrwagens. Durch diese modulare Bauweise können Verbesserungen in der Software und Hardware unkompliziert auch für ältere Leitungsfahrwagen genutzt werden. Ein defekter Schaltschrank kann somit einfach entfernt und zur Reparatur eingeschickt werden, während ein Ersatz-Schaltschrank unmittelbar installiert werden kann. Diese Lösung minimiert Stillstandzeiten und sorgt dafür, dass der Leitungsfahrwagen jederzeit einsatzbereit bleibt.

Die Frontseite des Gerüstkorbs ist mit einer Antriebswelle ausgestattet, die eine erste Gummi-Leitungsrolle trägt. Die Rückseite verfügt über eine Nachlaufwelle mit einer weiteren Gummi-Leitungsrolle. Diese Rollen sorgen für die Fortbewegung des Gerüstkorbs entlang der Überlandstromleitungen. Die Antriebswelle ist mit einem ersten Elektroantrieb verbunden, der über ein Übersetzungsgetriebe mit ihr gekoppelt ist, um eine effiziente Bewegung zu gewährleisten. In gleicher Weise verfügt die Nachlaufwelle über einen zweiten Elektroantrieb, der ebenfalls mit einem Übersetzungsgetriebe verbunden ist. Diese Antriebe ermöglichen eine energiesparende Fortbewegung und sorgen für ein ruckelfreies, erschütterungsfreies Fahren, was die Sicherheit erhöht.

An der Front- und Rückseite des Gerüstkorbs befinden sich jeweils ein erster und ein zweiter Überfahr-Ausleger. Diese dienen dazu, Hindernisse auf den Überlandstromleitungen, wie Isolatoren, zu überwinden. Dabei fährt der Leitungsfahrwagen an das Hindernis heran, legt den Überfahr-Ausleger auf die andere Seite des Hindernisses und aktiviert ihn mithilfe der Hydraulikpumpe. Durch das Schwenken des Überfahr-Auslegers werden die Gummi-Leitungsrollen von der Leitung abgehoben, sodass die Antriebswelle über das Hindernis hinwegbewegt werden kann. Anschließend wird der Überfahr-Ausleger wieder in seine Ausgangsposition zurückgeschwenkt, sodass die Gummi-Leitungsrollen erneut Kontakt mit der Leitung erhalten. Dies geschieht sowohl an der Front- als auch an der Rückseite in gleicher Weise.

Die Hydraulikpumpe wird elektrisch betrieben, wodurch eine energieeffiziente Nutzung des Leitungsfahrwagens ermöglicht wird. Die Übersetzungsgetriebe weisen eine hohe Übersetzung auf, was eine natürliche Hemmung der Bewegung bewirkt. Dadurch sind keine zusätzlichen Bremsvorrichtungen erforderlich, wenngleich diese aus Sicherheitsgründen vorgesehen werden können.

An einer der Seitenflächen des Gerüstkorbs befindet sich ein Bedienungszentrum, das mit einem Vorwärts-/Rückwärtshebel für die Steuerung der Fortbewegung sowie einem Seilzugbremshebel zur Geschwindigkeitsregulierung ausgestattet ist. Diese Bedienelemente ermöglichen eine präzise Steuerung des Leitungsfahrwagens und tragen zur Sicherheit und Effizienz seiner Nutzung bei.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
Figur 1 eine schematische Ansicht von schräg oben auf einen erfindungsgemäßen Leitungsfahrwagen L;
Figur 2 eine Frontansicht der Figur 1.

### Ausführungsbeispiel

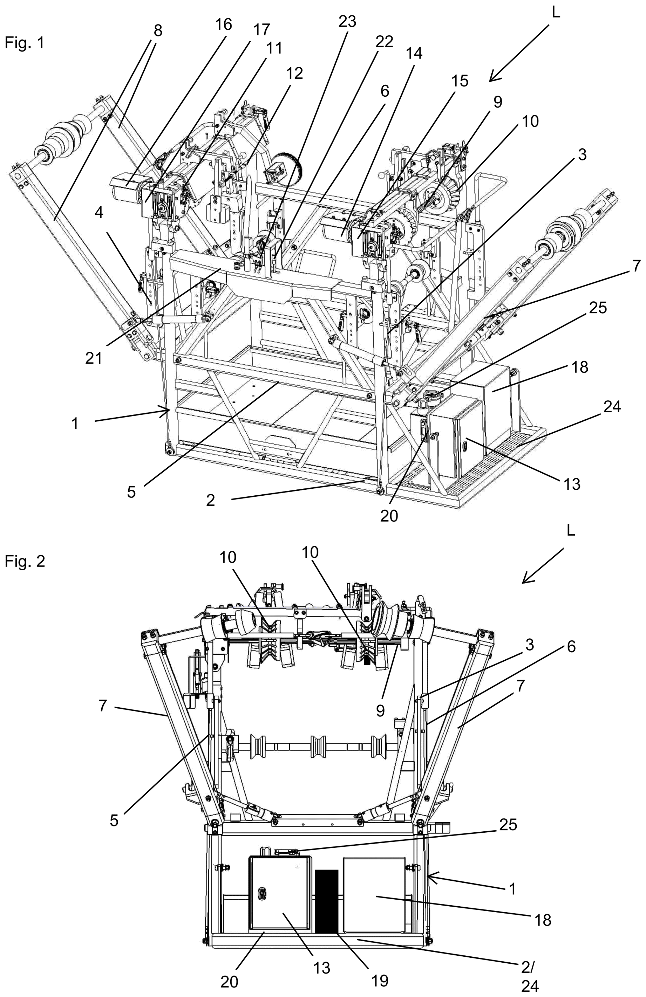

In Figur 1 ist eine schematische Ansicht von schräg oben auf einen erfindungsgemäßen Leitungsfahrwagen L. Er dient der der Wartung und Kontrolle von Überlandstromleitungen. Dazu fährt der Leitungsfahrwagen L auf den Überlandstromleitungen entlang der Überlandstromleitungen.

Der Leitungsfahrwagen L besteht in erster Linie aus einem Gerüstkorb 1, wobei der Gerüstkorb 1 aus einem Boden 2, einer Frontseite 3, einer Rückseite 4 und zwei Seitenflächen 5, 6 besteht. Der Gerüstkorb dient der sicheren Aufnahme der arbeitenden Personen, während der Kontroll- und Wartungsfahrten.

Der Boden 2 bildet außerdem eine Technikaufnahme 24 aus. Die Technikaufnahme 24 liegt wegen der besseren Zugänglichkeit außerhalb des Gerüstkorbs 1. In dem hier gezeigten Ausführungsbeispiel ist auf der Technikaufnahme 24 ein Schaltschrank 13, eine Hydraulikpumpe 18 und zwischen den beiden Bauteilen ein Stromspeicher 19 angeordnet. Der Schaltschrank 13 beinhaltet die Software und die notwendigen elektrischen Bauteile zur Nutzung des Leitungsfahrwagens L. Der Stromspeicher 19 dient der Versorgung der Hydraulikpumpe 18 und der Elektroantriebe 14, 16 mit elektrischem Strom.

Die Frontseite 3 weist eine Antriebswelle 9 auf, wobei die Antriebswelle 9 eine erste Gummi-Leitungsrolle 10 aufweist. In gleicher Weise weist die Rückseite 4 eine Nachlaufwelle 11 mit einer weiteren Gummi-Leitungsrolle 12 auf. Die Gummileitungsrollen 10, 12 dienen der Fortbewegung des Gerüstkorbs 1 entlang der Überlandstromleitungen.

Dazu weist die Antriebswelle 9 den ersten Elektroantrieb 14 auf. Zusätzlich ist zwischen der Antriebswelle 9 und dem ersten Elektroantrieb 14 ein erstes Übersetzungsgetriebe 15 angeordnet. Dadurch wird eine effektive Fortbewegung des Gerüstkorbs 1 erreicht.

In gleicher Weise weist die Nachlaufwelle 11 den zweiten Elektroantrieb 16 auf. Zwischen der Nachlaufwelle 11 und dem zweiten Elektroantrieb 16 ist ein zweites Übersetzungsgetriebe 17 angeordnet.

Die beiden Elektroantriebe 14, 16 erreichen mithilfe der jeweils zugeordneten Übersetzungsgetriebe 15, 17 eine den Erfordernissen angepasste zügige und energiesparende Fortbewegung. Außerdem ist vorteilhaft, dass durch diese Konstellation ein ruckelfreies und erschütterungsfreies Fahren des Gerüstkorbs 1 erreicht wird. Dies ist insbesondere deswegen vorteilhaft, weil es eine sicherere Fortbewegung ermöglicht, als dies bei Hydraulikantrieben bisher der Fall war.

Die Frontseite 3 weist einen ersten Überfahr-Ausleger 7 auf. Die Rückseite 4 weist einen zweiten Überfahr-Ausleger 8 auf. Die beiden Überfahr-Ausleger 7, 8 dienen der Überwindung von Hindernissen auf der Überlandstromleitung. Dabei wird beispielsweise ein Hindernis in Form Isolatoren in der Weise überwunden, dass der Leitungsfahrwagen L an das Hindernis heranfährt, dann wird der betroffene Überfahr-Ausleger 7, 8 auf der dem Gerüstkorb 1 abgewandten anderen Seite des Hindernisses auf die Überlandstromleitungen aufgelegt und anschließend wird beispielsweise der erste Überfahr-Ausleger 7 mittels einer Hydraulikpumpe 18 aktiviert.

Dabei schwenkt der erste Überfahr-Ausleger 7 weg von dem Gerüstkorb 1 weggedrückt. Dadurch wiederum werden die Gummi-Leitungsrollen 10 der Antriebswelle 9 von den Überlandstromleitungen abgehoben, was wiederum das Überwinden der Antriebswelle 9 über das Hindernis ermöglicht. Anschließend wird der erste Überfahr-Ausleger 7 wieder zu dem Gerüstkorb 1 geschwenkt, bis die Gummi-Leitungsrollen 10 wieder auf der anderen Seite des überwundenen Hindernisses wieder auf den Überlandstromleitungen zum Aufliegen kommen.

Das gleiche wird dann an der Rückseite 4 und dem dort befindlichen mittels des zweiten Überfahr-Ausleger 8, der auch von der Hydraulikpumpe 18 aktivierbar ist, wiederholt.

Dabei wird die Hydraulikpumpe 18 elektrisch betrieben. Auch dies dient energieeffizienten Fortbewegung des Leitungsfahrwagens L.

Die Übersetzungsgetriebe 15, 17 weisen eine Übersetzung von mehr als 1:25 auf. Dadurch erhält der Leitungsfahrwagen L eine technische bedingte Hemmung zur Fortbewegung. Diese Hemmung hat den Vorteil, dass es keiner zusätzlichen Bremsvorrichtungen bedarf, auch wenn dies aus Sicherheitsgründen trotzdem vorgesehen werden kann.

Weiter ist ein Stromspeicher 19 vorhanden. In dem hiergezeigten Ausführungsbeispiel ist er zwischen dem Schaltschrank 13 und der Hydraulikpumpe 18 angeordnet und besonders gut in der Figur 2 zu erkennen.

Der Stromspeicher 19 austauschbar ist. Dabei kann es sich beispielsweise um eine einfache Konstruktion wie bei austauschbaren Fahrrad-Akkus handeln.

Der Schaltschrank 13 ist ebenfalls auswechselbar angeordnet. Dies erfolgt beim gezeigten Ausführungsbeispiel beispielsweise auf die Weise, dass der Schaltschrank 13 mittels einer Schaubverbindung an einer Halteplatte 20 auswechselbar angeordnet ist, wobei die Halteplatte 20 fest mit dem Gerüstkorb 1, in diesem Fall, der Technikaufnahme 24 verbunden ist.

Zusätzlich ist der Schaltschrank 13 mit einer Verteilereinrichtung 25 lösbar gekoppelt. Die Verteilereinrichtung 25 dient der Verbindungsherstellung, der in dem Schaltschrank 13 befindlichen Software und elektronischen Bauteile mit dem Rest der Bauteile des Leitungsfahrwagens L. Die Auswechselbarkeit des Schaltschranks 13 vermeidet durch diese Anordnung längere Ausfallzeiten, falls Komponenten des Schaltschranks 13 einmal defekt sein sollten. Der Schaltschrank 13 wird auf einfache Weise abmontiert und zur Reparatur eingeschickt, wobei ein Ersatz-Schaltschrank angebracht werden kann, damit der Leitungsfahrwagen L währen der Reparaturzeiten weiter betrieben werden kann. Auch können beispielsweise Verbesserungen in Software und Hardware des Schaltschranks 13 einfacher dadurch auch für ältere Leitungsfahrwagen genutzt werden.

Zusätzlich ist in der Figur 1 gut zu erkennen, dass an der einen Seitenfläche 5 ein Bedienungszentrum 21 vorhanden ist, wobei das Bedienungszentrum 21 einen Vorwärts-/Rückwärtshebel 22 für die Fortbewegung des Leitungsfahrwagens L mittels der beiden Elektroantriebe 14, 16 aufweist. Zusätzlich umfasst er einen Seilzugbremshebel 23, um ggf. die Fahrtgeschwindigkeit der Leitungsfahrwagens L zu verzögern.

### Bezugszeichenliste

| | |
|---|---|
| 1 | Gerüstkorb |
| 2 | Boden |
| 3 | Frontseite |
| 4 | Rückseite |
| 5 | Erste Seitenfläche |
| 6 | Zweite Seitenfläche |
| 7 | erster Überfahr-Ausleger |
| 8 | zweiter Überfahr-Ausleger |
| 9 | Antriebswelle |
| 10 | erste Gummi-Leitungsrolle |
| 11 | Nachlaufwelle |
| 12 | weitere Gummi-Leitungsrolle |
| 13 | Schaltschrank |
| 14 | erster Elektroantrieb |
| 15 | erstes Übersetzungsgetriebe |
| 16 | zweiter Elektroantrieb |
| 17 | zweites Übersetzungsgetriebe |
| 18 | Hydraulikpumpe |
| 19 | Stromspeicher |
| 20 | Halteplatte |
| 21 | Bedienungszentrum |
| 22 | Vorwärts-/Rückwärtshebel |
| 23 | Seilzugbremshebel |
| 24 | Technikaufnahme |
| 25 | Verteilereinrichtung |
| 26 | |
| 27 | |
| 28 | |
| 29 | |
| 30 | |
| 31 | |
| 32 | |
| 33 | |

## Patentansprüche

1. Leitungsfahrwagen (L) für Überlandstromleitungen mit einem Gerüstkorb (1), wobei der Gerüstkorb (1) aus einem Boden (2), einer Frontseite (3), einer Rückseite (4) und zwei Seitenflächen (5, 6) besteht, wobei die Frontseite (3) einen ersten Überfahr-Ausleger (7) aufweist und die Rückseite (4) einen zweiten Überfahr-Ausleger (8) aufweist, wobei die Frontseite (3) eine Antriebswelle (9) aufweist, wobei die Antriebswelle (9) eine erste Gummi-Leitungsrolle (10) aufweist, wobei die Rückseite (4) eine Nachlaufwelle (11) mit einer weiteren Gummi-Leitungsrolle (12) aufweist, wobei ein Schaltschrank (13) vorhanden ist,
**dadurch gekennzeichnet, dass**
- die Antriebswelle (9) einen ersten Elektroantrieb (14) aufweist, wobei zwischen der Antriebswelle (9) und dem ersten Elektroantrieb (14) ein erstes Übersetzungsgetriebe (15) angeordnet ist und
- die Nachlaufwelle (11) einen zweiten Elektroantrieb (16) aufweist, wobei zwischen der Nachlaufwelle (11) und dem zweiten Elektroantrieb (16) ein zweites Übersetzungsgetriebe (17) angeordnet ist,
- wobei der erste Überfahr-Ausleger (7) und der zweite Überfahr-Ausleger (8) mittels einer Hydraulikpumpe (18) aktivierbar sind,
- wobei die Hydraulikpumpe (18) elektrisch betrieben ist.

2. Leitungsfahrwagen nach Anspruch 1, **dadurch gekennzeichnet, dass** die Übersetzungsgetriebe (15, 17) eine Übersetzung von mehr als 1:25 aufweisen.

3. Leitungsfahrwagen nach Anspruch 1 oder 2, **dadurch gekennzeichnet, dass** ein Stromspeicher (19) vorhanden ist.

4. Leitungsfahrwagen nach Anspruch 3, **dadurch gekennzeichnet, dass** der Stromspeicher (19) austauschbar ist.

5. Leitungsfahrwagen nach einem der vorigen Ansprüche, **dadurch gekennzeichnet, dass** der Schaltschrank (13) auswechselbar angeordnet ist.

6. Leitungsfahrwagen nach Anspruch 5, **dadurch gekennzeichnet, dass** der Schaltschrank (13) mittels einer Schaubverbindung an einer Halteplatte (20) auswechselbar angeordnet ist, wobei die Halteplatte (20) fest mit dem Gerüstkorb (1) verbunden ist.

7. Leitungsfahrwagen nach einem der vorigen Ansprüche, **dadurch gekennzeichnet, dass** eine der Seitenflächen (5, 6) eine Bedienungszentrum (21) aufweist, wobei das Bedienungszentrum (21) einen Vorwärts-/Rückwärtshebel (22) aufweist und einen Seilzugbremshebel (23) umfasst.

8. Leitungsfahrwagen nach einem der vorigen Ansprüche, **dadurch gekennzeichnet, dass** der Boden (2) eine Technikaufnahme (24) ausbildet.

9. Leitungsfahrwagen nach einem der vorigen Ansprüche, **dadurch gekennzeichnet, dass** der Schaltschrank (13) mit einer Verteilereinrichtung (25) lösbar gekoppelt ist.
